# EUROPÄISCHE PATENTSCHRIFT

(11) **EP 0 942 856 B1**
(45) Veröffentlichungstag und Bekanntmachung des Hinweises auf die Patenterteilung: **03.04.2002**
(21) Anmeldenummer: 97949873.0
(22) Anmeldetag: 06.11.1997
(51) Int. Cl.: B60R 25/04

(54) **VERFAHREN ZUR SICHERUNG DER DATENÜBERTRAGUNG**
PROCESS FOR SECURING THE PRIVACY OF DATA TRANSMISSION
PROCEDE POUR ASSURER LA SECURITE DE LA TRANSMISSION DE DONNEES

(30) Priorität: 16.12.1996 DE 19652256
(43) Veröffentlichungstag der Anmeldung: 22.09.1999
(73) Patentinhaber: ROBERT BOSCH GMBH, 70442 Stuttgart (DE)
(72) Erfinder: BITZER, Wolfgang, D-71554 Weissach (DE)
(86) Internationale Anmeldenummer: DE9702579
(87) Internationale Veröffentlichungsnummer: WO9826962

(56) Entgegenhaltungen:
- EP-A- 0 492 692
- EP-A- 0 692 412
- EP-A- 0 723 896
- WO-A-96/20100
- DE-A- 4 442 103
- DE-A- 19 548 019

## Beschreibung

### Stand der Technik

Die Erfindung geht aus von einem Verfahren zur Sicherung der Datenübertragung zwischen Steuereinheiten in einem Kraftfahrzeug nach der Gattung des Hauptanspruchs. Ein solches Verfahren ist prinzipiell bekannt aus EP 0 692 412 A2. Ähnliche Verfahren sind auch aus DE-A-195 480 19, WO-A-96/20100 sowie aus EP-A-0 492 692 bekannt. Bei der WO-A-96/20100 erfolgt zur weiteren Erhöhung der Abhörsicherheit zusätzlich eine Verschlüsselung der Zufallsbitfolge.

Eine Anwendung der Datenübertragung, bei der eine besonders sichere Übertragung von Daten zwischen Steuereinheiten erforderlich ist, ist auch aus der DE 44 42 103 bekannt. Dabei handelt es sich um einen Diebstahlschutz für Kraftfahrzeuge, bei dem eine Wegfahrsperre die Freischaltung eines Motorsteuergeräts beeinflußt. Zur Freischaltung des Motorsteuergeräts muß ein Code in eine Codeerfassungseinrichtung eingegeben und damit die Verriegelungssteuereinrichtung angesteuert werden. Die Datenkommunikation zwischen den Steuereinheiten läuft über einen fahrzeuginternen Bus. In dem bekannten Stand der Technik erfolgt zwar die Inbetriebnahme der Wegfahrsperre über einen Schlüsselcode, der nur dem Benutzer zugänglich ist, die Kommunikation zwischen der Wegfahrsperre-Steuereinheit und einem Motorsteuergerät erfolgt über die serielle Datenübertragungsleitung uncodiert. Da es sich bei einem solchen Freigabe- bzw. Blockiersignal um ein sehr einfaches Signal handelt, das im Extremfall aus einem Bit besteht, kann ein solches Signal sehr leicht manipuliert werden. Es wäre in einem solchen Verfahren möglich, durch Auftrennen der Verbindungsleitung ein manipuliertes Signal einzuspeisen. Ein solch manipuliertes Signal könnte auf einfache Weise durch Wiedereinspielen eines früher von dieser Übertragungsleitung abgenommenen und aufgezeichneten Signals erfolgen.

### Vorteile der Erfindung

Das erfindungsgemäße Verfahren mit den Merkmalen des Anspruchs 1 hat demgegenüber den Vorteil, daß die Datenübertragung zwischen Steuereinheiten in einer codierten Form erfolgt, und daß eine solche Datenübertragung nicht einfach zu manipulieren ist, zumal die Zufallsbitfolge, die die Basis für die Verschlüsselung darstellt, aus im Fahrzeug gewonnenen Sensordaten, die über den Datenfluß auf dem Bus zugänglich sind, gewonnen wird. So kann ein Auftrennen der Verbindungsleitung und ein Abhören des über die Leitung übertragenen, codierten Signals nicht zu einem Erfolg führen. Auch ein Austauschen z.B. der Steuereinheit für die Wegfahrsperre, ebenso wie das Austauschen der Motorsteuereinheit führt nicht zu einem Erfolg, weil die in den Geräten vorhandenen Schlüssel nicht mehr übereinstimmen. Auch das Abtrennen und das Wiederanlegen der Batteriespannung kann die Datenübertragung nicht beeinflussen. Auch das Auslesen der Speicher der Steuereinheiten und eine Manipulation der in ihnen hinterlegten internen Schlüssel führt zu keiner ordnungsgemäßen Kommunikation zwischen den Steuereinheiten. Selbst das paarweise Austauschen einer Motorsteuereinheit und eines Gerätes für die Wegfahrsperre führt nicht zum Erfolg, da immer noch der nur dem Benutzer bekannte Schlüssel fehlt.

Durch die in den Unteransprüchen 2 bis 10 aufgeführten Maßnahmen ist eine vorteilhafte Weiterbildung und Verbesserung des im Anspruch 1 angegebenen Verfahrens möglich. Besonders vorteilhaft ist es dabei, daß die Kommunikation zwischen Steuereinheiten in der erfindungsgemäßen Form für die sicherheitsrelevante Kommunikation zwischen der Steuereinheit einer Wegfahrsperre und der Steuereinheit einer Motorsteuerung einzusetzen ist.

Aus Gründen der Sicherheit, um zu vermeiden, daß die Zufallsbitfolge durch Ausprobieren erraten werden kann, sollte die Zufallsbitfolge eine Länge von 4 Byte aufweisen. Auch für die Länge des internen Schlüssels, der für die Verschlüsselung von Nachrichten zwischen den Steuereinheiten eingesetzt wird ist eine Länge von mindestens 4 Byte vorteilhaft.

Um ein Kryptogramm mit dem gewonnenen Schlüssel zu erstellen wird ein Signalbyte bitweise modulo 2 mit einem ersten Byte des Schlüssels addiert, das Ergebnis einer Permutation unterworfen und deren Ergebnis anschließend weiteren Additionnen bzw. Multiplikationen mit den weiteren Bytes des Schlüsselbytes unterworfen. Das resultierende Signalbyte besteht aus den Einzelergebnissen der Verschlüsselungsschritte. Das erfindungsgemäße Verschlüsselungsverfahren kann mit verschiedenen Permutationstabellen arbeiten. Insbesondere kann die Permutation auch durch Multiplikation realisiert werden. Eine Erhöhung der Sicherheit der Verschlüsselung erreicht man durch parallel zueinander arbeitenden Verschlüsselungsschritten.

### Zeichnungen

Ein Ausführungsbeispiel der Erfindungen ist in den Zeichnungen dargestellt und in der nachfolgenden Beschreibung näher erläutert. Es zeigt Figur 1 den Ablauf einer Kommunikation zwischen zwei Steuereinheiten, Figur 2 die Inbetriebnahme einer Motorsteuerung in einer Wegfahrsperre und Figur 3 das Verschlüsselungsverfahren.

### Beschreibung des Ausführungsbeispiels

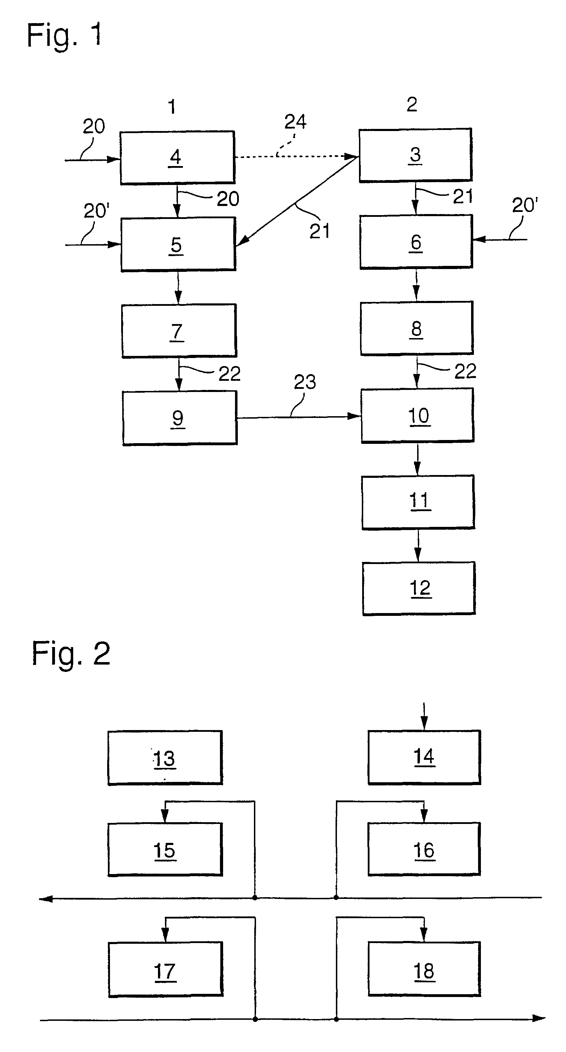

Die Kommunikation zwischen zwei Steuereinheiten 1 und 2 nach Figur 1 erfolgt nach dem Einbringen eines Schlüssels 20 in die erste Steuereinheit, z.B. die Wegfahrsperre. Dieses Schlüsselsignal 20 kann ein codierter Schlüssel, eine über eine Chipkarte eingebrachte Codierung, eine Funkcodierung usw. sein. Das Schlüsselsignal 20 wird von der Wegfahrsperre 4 erkannt und ein Wecksignal 24, daß ein gültiger Schlüssel vorhanden ist , auf die Datenleitung gegeben. Dieses Signal erfüllt eine Weckfunktion für die Steuereinheit 2. Die Steuereinheit generiert im Schritt 3 eine Zufallsbitfolge 21 von nₜ Bitlänge, speichert diese Bitfolge und überträgt sie in die Steuereinheit 1. Die Anzahl der Bits der Zufallsfolge muß so gewählt sein, daß ein Angreifer, der das Gerät bzw. das Fahrzeug zur Verfügung hat, nicht in der Lage ist alle möglichen Antworten auf sämtliche Zufallsbitfolgen durch Ausprobieren zu ermitteln und aufzuzeichnen. Wenn man die Länge der Zufallsbitfolge in Abhängigkeit von der Anzahl der möglichen Permutationen betrachtet, erhält man für eine Zufallsbitfolge 21 von einem Byte Länge eine Summe von einmal 265 Bytes, bei einer Länge von 4 Bytes bereits eine Zahl von viermal 256⁴ = 17,2 Gbyte. Eine solche Datenmenge abzuspeichern ist auch für einen Dieb nicht mehr leicht möglich. Nach der Übertragung der Zufallsbitfolge wird im Schritt 5 bzw. 6, d.h. in beiden Steuereinheiten gleichzeitig ein Chiffriergenerator mit einem internen Schlüssel 20' initialisiert. Dabei ist der interne Schlüssel 20' sowohl in der Steuereinheit 1 als auch in der Steuereinheit 2 vorhanden. Im Fall einer korrekten Inbetriebnahme ist der interne Schlüssel 20' für beide Geräte gleich. Gerade diese Tatsache muß aber durch die Kommunikation zunächst überprüft werden. Die Länge des Schlüssels 20' muß so groß gewählt werden, daß seine Ermittlung durch Ausprobieren ausgeschlossen ist. Natürlich kann ein Angreifer zufälligerweise schon beim ersten Versuch den Schlüssel erwischen, es kann aber auch genausogut der letzte mögliche Schlüssel sein. Man geht davon aus, daß der Angreifer im Mittel die Hälfte aller möglichen Schlüssel ausprobieren muß, um Erfolg zu haben. Ein Vergleich der Zeiten, die ein möglicher Angreifer aufwenden muß, um verschiedene Schlüssel auszuprobieren wird im folgenden gegeben: Bei einer Schlüssellänge von 1 Byte benötigt ein Angreifer einhalbmal 2⁸ Sekunden = 128 Sekunden, wenn man unterstellt, daß der Angreifer einen Versuch pro Sekunde unternimmt. Erhöht man die Schlüssellänge auf 2 Byte sind bereits ca. 9 Stunden, bei Erhöhung auf 3 Byte 97 Tage und bei 4 Byte bereits 69 Jahre erforderlich. Damit erscheint eine Länge von 3 Byte als ausreichende Schlüssellänge. Wenn man aber noch in Betracht zieht, daß durch parallelisieren und ähnliche Verfahren die Geschwindigkeit verzehn- oder sogar verhundertfacht werden könnte, ist ein Wert von 4 Byte für diese Anwendung angemessen.

Der Schlüssel 20' muß sowohl in der Steuereinheit 1 als auch in der Steuereinheit 2 so untergebracht sein, daß er nicht ausgelesen werden kann. Es darf für Unbefugte auch nicht möglich sein, ihn zu ändern oder zu überschreiben. Anderseits muß es im Fall einer notwendigen Reparatur auch möglich sein, defekte Teile, z.B. Steuergeräte oder Teile von Steuergeräten auszutauschen und neu zu initialisieren. Daher ist für das Verschlüsseln und für das Speichern des Schlüssels 20' in der Elektronik der Steuereinheiten ein hoher Aufwand zu treiben. Mit dem Schlüssel 20' und der Zufallsbitfolge 21 wird der Schlüsselcode 22 in den Schritten 7 und 8 erzeugt. Der Schlüsselcode 22 dient zur Verschlüsselung eines von dem Steuergerät 1 an das Steuergerät 2 und umgekehrt zu sendenden Nachricht. Die erste Nachricht der Steuereinheit 1 besteht aus einem Text, in dem mindestens nᵣ Bits unveränderlich (redundant) sind und der der Steuereinheit 2 bekannt ist. Im Schritt 9 wird dieses resultierende Kryptogramm in der Länge von nₛ Bit übertragen. Die Länge nₛ ist die Länge der bei Bedarf zusätzlich verschlüsselt ausgetauschten Information zuzüglich der Länge nᵣ der redundanten Bits. Die Verknüpfung der Nachricht mit dem Schlüsselcode in Schritt 9 kann durch die bitweise Addition modulo 2 erfolgen. In diesem Fall kann die zusätzlich verschlüsselt übertragene Information 23 von Unbefugten zwar nicht verstanden und interpretiert werden, es können aber immer noch Bits an bestimmten Positionen gezielt und für die Fahrzeugelektronik eventuell unbemerkt invertiert und somit Kommandos verfälscht werden. Dies kann aber durch die zusätzliche Einführung einer Textrückführung, die eine Fehlerfortpflanzung zur Folge hat, verhindert werden. Wenn dann die Zusatzinformation vor der unveränderlichen Kennung übertragen wird, wird letztere bei einer beliebigen Verfälschung der Zusatzinformation verändert und der Manipulationsversuch wird auf jeden Fall entdeckt. Der Kommunikationsaufbau bleibt dann erfolglos. Im Schritt 10 wird die in den empfangenen und entschlüsselten Kryptogramm enthaltene unveränderliche Bitfolge von nᵣ Bit Länge mit der gespeicherten unveränderlichen Bitfolge verglichen, und damit die unveränderlichen nᵣ Bits auf Korrektheit geprüft. Im nächsten Schritt 11 wird bei einem korrekten Vergleichsergebnis und z.B einer Motorsteuereinheit der Motor freigegeben, und die restlichen nₛ-nᵣ entschlüsselten, informationstragenden Bits der Nachricht 23 ausgegeben. Zeigt der Vergleich mit der Nachricht 23, daß ein Fehler, z.B. durch einen Manipulationsversuch aufgetreten ist, bleibt der Motor blockiert. Auf diese Weise lassen sich bei Steuereinheiten Funktionen blockieren.

Figur 2 zeigt den Ablauf bei der Kommunikation zwischen einer Wegfahrsperre und einer Motorsteuereinheit. Der Kryptoalgorithmus in der Motorsteuereinheit wird durch zufällige Einflußgrößen, die durch einen Pfeil gekennzeichnet sind, in einen Anfangszustand gebracht. Das Motorsteuergerät ist im aktiven Zustand 14 während die Wegfahrsperre blockiert ist 13. Der Kryptoalgoritmus im Steuergerät schickt sein Signal in der Form von mindestens 4 Bytes an das Steuergerät der Wegfahrsperre, um dieses Steuergerät zu initialisieren und zu kryptosynchronisieren 15. Das Steuergerät der Wegfahrsperre ist initialisiert 17 und beginnt mit der Übertragung von beliebig vielen (nₛ/8) Bytes verschlüsselter Information an die Motorsteuerung 18. Die Echtheit der Information wird dadurch erkannt, daß richtig entschlüsselt werden kann. Um dies zu überprüfen und damit die Fahrt freizugeben, muß in der übertragenen Information genügend Redundanz nᵣ, also dem Empfänger bereits vorher bekannte Information, enthalten sein. Als Beispiel sollen deshalb die von der Wegfahrsperre zur Motorsteuerung übertragenen verschlüsselten Daten mindestens 16 Bit der Motorsteuerung bekannte Daten enthalten, die die Motorsteuerung nach dem Entschlüsseln wiedererkennen muß. Dies können z.B. zwei Byte mit 00 oder 11 oder einem anderen festen Bitmuster sein. In verschlüsselten Signalen sind diese beiden Bytes nicht zu erkennen, sie werden jedesmal anders verschlüsselt. Aus diesem Grund können sie auch nicht von einem Dritten, der den Schlüsselcode 22 nicht kennt, gefälscht werden. Die 16 redundanten Bits brauchen nicht unbedingt geschlossen in der Form von zwei Bytes übertragen werden, sie können auch beliebig in die verschlüsselt zu übertragenden Information verschachtelt werden. Sie müssen dann in der Motorsteuerung einzeln durch Vergleich mit dem erwarteten Bitmuster verifiziert werden.

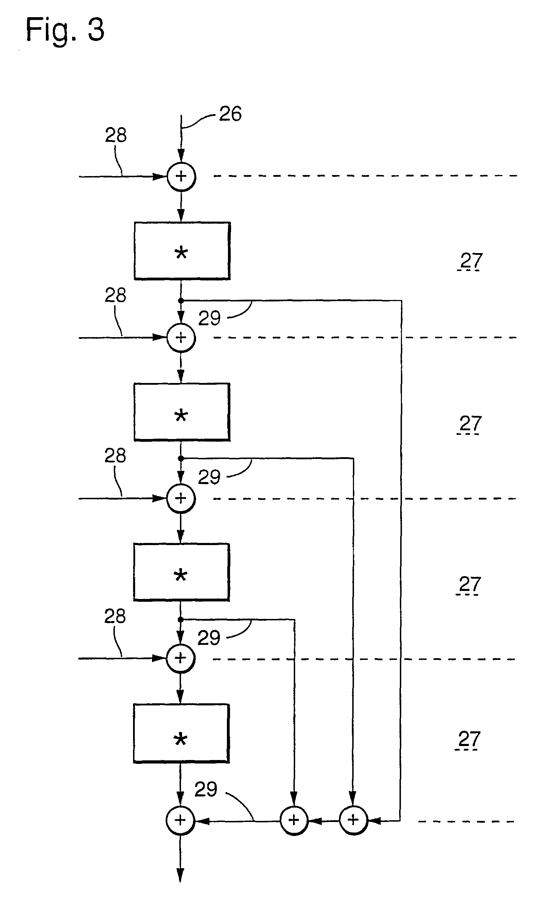

Figur 3 zeigt den eigentlichen Kryptoalgoritmus, der aus vier gleichen Modulen 27 besteht, die in Kette geschaltet sind. In Fig. 3 bedeutet ein + die bitweise Addition modulo 2, ein * die Multiplikation modulo 257. Die vier Bytes des Schlüsselcodes 22 sind mit 28 bezeichnet, die Ausgangsbytes der Module 27 mit 29. Auf das Eingangsbyte 26 eines jeden Moduls wird zunächst bitweise modulo 2 ein Byte 28 des Schlüsselcodes addiert, mit anderen Worten jedes Byte des Eingangsbytes wird mit einem gleichwertigen Byte des jeweiligen Schlüsselbytes EXOR-verknüpft. Das Ergebnis wird, bezüglich sowohl der Rechnung modulo 256 als auch der bitweisen modulo 2-Addition, nichtlinearen Permutationen unterworfen. Diese Permutationen lassen sich am besten mit einer Tabelle durchführen, die aber im allgemeinen viel Speicherplatz im ROM benötigt. Fast genauso gut ist die Realisierung der Permutation durch Multiplikation mit einer ungeraden Zahl zwischen 3 und 253 modulo 257, wobei am Ausgang der Wert 256 durch den aus dem Eingangswert 256 resultierenden Wert also durch (256 * F) modulo 257 zu ersetzen ist. F ist ein ungerader Faktor. Das Ausgangsbyte 29 jedes Moduls mit Ausnahme des letzten Moduls 27 wird jeweils dem Eingang des Nachfolgers zugeführt. Die bitweise modulo 2 Summe der Ausgangsbytes 29 bilden das Ausgangsbyte 23, das zur Ver- bzw. Entschlüsselung durch bitweise modulo 2 Addition auf das Klar- bzw. Geheimbyte verwendet wird.

### Weitere Ausführungsbeispiele

Der beschriebene Kryptoalgoritmus kann auf verschiedene Weisen modifiziert werden: Die ungeraden Faktoren F_{I} können in weiten Bereichen zwischen 3 und 253 frei und für jeden Modul 27 anders gewählt werden. Dabei ist die Wahl von mittleren Werten von Vorteil. In der Kette können, wie bereits oben angedeutet, weitere Module 27 hinzugefügt werden, wodurch sich die Länge des geheimen Schlüssels, aber auch die Länge des Synchronisiervorspanns und die Länge der Fehlerfortpflanzung entsprechend verlängert. Falls nur eine Vergrößerung des Schlüsselcodes 22 erwünscht ist, ohne Verlängerung der Synchronisierung, kann man auch eine weitere Kette parallel hinzufügen, deren Eingang mit dem Eingang der ersten Kette verbunden ist und deren Ausgänge zu den Ausgängen der ersten bitweise modulo 2 addiert wird. Wenn man eine unendlich lange Fehlerfortpflanzung haben möchte, kann man nach Erreichen der Synchronisierung die Konfiguration der Sendeseite mit derjenigen der Empfangsseite vertauschen.

Das erfindungsgemäße Verfahren erlaubt eine verschlüsselte Kommunikation von Steuergeräten, von Teilen der Steuergeräte oder einzelner elektronischer Module über eine geeignete Verbindung. Das Verfahren läßt sich zur Übertragung von einzelnen Steuersignalen als auch von großen Datenmengen einsetzen.

## Patentansprüche

1. Verfahren zur Sicherung der Datenübertragung zwischen mindestens zwei Steuereinheiten (1, 2) in einem Kraftfahrzeug, die über einen Datenbus miteinander verbunden sind, wobei eine der Steuereinheiten eine Zufallsbitfolge (21) auf dem Datenbus überträgt, die in allen Steuereinheiten abgespeichert wird, wobei in allen Steuereinheiten ein Schlüsselcode (22) mit der Zufallsbitfolge (21) und einem internen Schlüssel (20') erstellt wird und wobei von einer der Steuereinheiten eine mit dem Schlüsselcode (22) verschlüsselte Nachricht (23) erstellt und gesendet wird, die in den empfangenden Steuereinheiten auf ihre korrekte Verschlüsselung anhand von in der verschlüsselten Nachricht (23) enthaltenen redundanten Information, die den empfangenden Steuereinheiten bekannt sind, mit dem Schlüsselcode (22) überprüft und gelesen wird, **dadurch gekennzeichnet, daß** die Zufallsbitfolge (21) aus vorhandenen Sensordaten der Steuereinheit (2) generiert wird.

2. Verfahren zur Sicherung der Datenübertragung nach Anspruch 1, **dadurch gekennzeichnet, daß**
- eine erste Steuereinheit (1) mit einem Schlüsselsignal (20) in Betrieb genommen wird,
- durch die erste Steuereinheit (1) das Empfangen des Schlüsselsignals (20) durch ein Wecksignal (24) auf dem Datenbus quittiert wird,
- eine zweite Steuereinheit (2) auf das Wecksignal (24) initialisiert wird,
- von der zweiten Steuereinheit (2) aus eine Übertragung einer Zufallsbitfolge (21) an die erste Steuereinheit (1) vorgenommen wird,
- in beiden Steuereinheiten ein Schlüsselcode (22) mit der Zufallsbitfolge (21) und einem internen Schlüssel (20') erstellt wird,
- und von der ersten Steuereinheit (1) eine Nachricht (23) gesendet wird, die in der Steuereinheit (2) auf ihre korrekte Verschlüsselung mit dem Schlüsselcode (22) überprüft wird.

3. Verfahren zur Sicherung der Datenübertragung nach Anspruch 1 oder 2, **dadurch gekennzeichnet, daß** die erste Steuereinheit (1) eine Wegfahrsperre und die zweite Steuereinheit (2) eine Motorsteuerung ist, und daß bei korrekter Verschlüsselung der Nachricht (23), die an die Motorsteuerung (2)gesendet wird, eine Freigabe erfolgt.

4. Verfahren zur Sicherung der Datenübertragung nach Anspruch 1 bis 3, **dadurch gekennzeichnet, daß** für die Zufallsbitfolge (21) eine Länge von mindestens 4 Byte festgelegt wird.

5. Verfahren zur Sicherung der Datenübertragung nach Anspruch 1 bis 4, **dadurch gekennzeichnet, daß** die Länge des Schlüsselcodes (22) mit mindestens 4 Byte festgelegt wird.

6. Verfahren zur Sicherung der Datenübertragung nach Anspruch 1 bis 5, **dadurch gekennzeichnet, daß** zur Erstellung einer Nachricht (23) auf ein Signalbyte (25) in mehreren Modulen (27) jeweils bitweise, modulo 2, ein Byte (28) des Schlüsselcodes (22) addiert wird, anschließend einer Permutation unterzogen wird und das Ergebnis in das nächste Modul (27) eingegeben wird, und daß nach jedem Verfahrensschritt das jeweilige Ergebnis (29) zu einem verschlüsselten Signalbyte (23) zusammengefaßt wird.

7. Verfahren zur Sicherung der Datenübertragung nach Anspruch 1 bis 6, **dadurch gekennzeichnet, daß** die Permutation durch Multiplikation modulo 257 des Wertes des Eingangsbytes mit einem Faktor Fi erfolgt.

8. Verfahren zur Sicherung der Datenübertragung nach Anspruch 7, **dadurch gekennzeichnet, daß** der Faktor Fi zwischen 3 und 253 und für jeden Verschlüsselungsmodul (27) frei wählbar ist.

9. Verfahren zur Sicherung der Datenübertragung nach Anspruch 1 bis 7, **dadurch gekennzeichnet, daß** die Verschlüsselung über mehrere parallel zueinander arbeitende Kryptogeneratorketten erreicht wird.

10. Verfahren zur Sicherung der nach Anspruch 1 bis 9, **dadurch gekennzeichnet, daß** bei einem negativen Ergebnis der Überprüfung eine Fehlermeldung generiert wird und/oder Funktionen der Steuereinheiten unterbrochen werden.

## Claims

1. Method for security of data transmission between at least two control units (1, 2) in a motor vehicle, which are connected to one another via a data bus, with one of the control units transmitting a random bit sequence (21) on the data bus, which is stored in all the control units, with a key code (22) being produced in all the control units using the random bit sequence (21) and an internal key (20'), and with a message (23) which is encrypted using the key code (22) being produced and being transmitted by one of the control units and being checked and read, using the key code (22) in the receiving control units for its correct encryption on the basis of the redundant information which is contained in the encrypted message (23) and is known to the receiving control units, **characterized in that** the random bit sequence (21) is generated from existing sensor data in the control unit (2).

2. Method for security of data transmission according to Claim 1, **characterized in that**
- a first control unit (1) is started up using a key signal (20),
- the first control unit (1) acknowledges reception of the key signal (20) by means of a wake-up signal (24) on the data bus,
- a second control unit (2) is initialized to the wake-up signal (24),
- the second control unit (2) transmits a random bit sequence (21) to the first control unit (1),
- both control units use the random bit sequence (21) and an internal key (20') to produce a key code (22),
- and the first control unit (1) sends a message (23) whose correct encryption is checked in the control unit (2) using the key code (22).

3. Method for security of data transmission according to Claim 1 or 2, **characterized in that** the first control unit (1) is an immobilizer and the second control unit (2) is an engine controller, and **in that** enabling takes place if the message (23) which is sent to the engine controller (2) is correctly encrypted.

4. Method for security of data transmission according to Claims 1 to 3, **characterized in that** the random bit sequence (21) has a defined length of at least four bytes.

5. Method for security of data transmission according to Claims 1 to 4, **characterized in that** the key code (22) has a defined length of at least 4 bytes.

6. Method for security of data transmission according to Claims 1 to 5, **characterized in that** a message (23) is produced by adding, modulo 2, one byte (28) of the key code (22), in each case bit-by-bit, to one signal byte (25) in a number of modules (27), then subjecting the result to a permutation, and entering the result in the next module (27), and **in that**, after each method step, the respective result (29) is combined to form an encrypted signal byte (23).

7. Method for security of data transmission according to Claims 1 to 6, **characterized in that** the permutation is carried out by modulo 257 multiplication of the value of the input byte by a factor Fi.

8. Method for security of data transmission according to Claim 7, **characterized in that** the factor Fi can be selected freely between 3 and 253, and can be selected freely for each encryption module (27).

9. Method for security of data transmission according to Claims 1 to 7, **characterized in that** the encryption is achieved via a number of crypto generator chains operating in parallel with one another.

10. Method for security of data transmission according to Claims 1 to 9, **characterized in that**, if the result of the check is negative, an error message is generated and/or functions of the control units are interrupted.

## Revendications

1. Procédé de protection de la transmission des données entre au moins deux unités de commande (1, 2) dans un véhicule automobile, reliées par un bus de données,
l'une des unités de commande transmettant une suite de bits aléatoires (21) au bus de données, qui sont mémorisés dans toutes les unités de commande,
un code clé (22) étant établi dans toutes les unités de commande avec la suite de bits aléatoires (21) et une clé interne (20'),
et l'une des unités de commande forme un message crypté (23) avec le code clé (22) et envoie celui-ci,
ce message étant vérifié dans les unités de commande réceptrices, pour contrôler le cryptage correct à l'aide d'informations redondantes contenues dans le message codé (23), informations connues dans les unités de commande réceptrices, en étant vérifié avec le code lé (22) et ce message est lu,
**caractérisé en ce que**
la suite des bits aléatoires (21) est générée à partir de données de capteurs existants dans l'unité de commande (2).

2. Procédé de protection de la transmission des données selon la revendication 1,
**caractérisé en ce que**
- on met en oeuvre une première unité de commande (1) avec un signal de code (20),
- on acquitte, par la première unité de commande (1), la réception du signal de code (20) par un signal de réveil (24) à l'aide du bus de données,
- on initialise une seconde unité de commande (2) par le signal de réveil (24),
- à partir de la seconde unité de commande (2), on transmet une suite de bits aléatoires (21) à la première unité de commande (1),
- dans les deux unités de commande on établit un code clé (22) avec la succession de bits aléatoires (21) et une clé interne (20'),
- et la première unité de commande (1) envoie une information (23) dont l'unité de commande (2) vérifie le cryptage correct par le code clé (22).

3. Procédé de protection de la transmission de données selon l'une quelconque des revendications 1 ou 2,
**caractérisé en ce que**
la première unité de commande (1) est un blocage anti-démarrage et la seconde unité de commande (2) est une commande de moteur et
le cryptage correct du message (23) envoyé à la commande de moteur (2) assure une libération.

4. Procédé de protection de la transmission de données selon l'une quelconque des revendications 1 à 3,
**caractérisé en ce que**
la suite de bits aléatoires (21) est fixée à une longueur d'au moins 4 octets.

5. Procédé de protection de la transmission de données selon l'une quelconque des revendications 1 à 4,
**caractérisé en ce que**
la longueur du code clé (22) est fixée à au moins 4 octets.

6. Procédé de protection de la transmission de données selon l'une quelconque des revendications 1 à 5,
**caractérisé en ce que**
pour établir un message (23) on additionne à un octet de signal (25) dans plusieurs modules (27), chaque fois par bit, modulo 2, un octet (28) du code clé (22) et ensuite on effectue une permutation et on transmet le résultat au module suivant (27) et
après chaque étape du procédé on regroupe le résultat correspondant (29) en un octet de signal crypté (23).

7. Procédé de protection de la transmission de données selon l'une quelconque des revendications 1 à 6,
**caractérisé en ce qu'**
on fait la permutation par multiplication modulo 257 de la valeur de l'octet d'entrée avec un coefficient Fi.

8. Procédé de protection de la transmission de données selon la revendication 7,
**caractérisé en ce que**
le coefficient Fi est choisi librement entre 3 et 253 pour chaque module de cryptage (27).

9. Procédé de protection de la transmission de données selon l'une quelconque des revendications 1 à 7,
**caractérisé en ce que**
le cryptage se fait par plusieurs chaînes de générateurs de cryptage travaillant en parallèle.

10. Procédé de protection de la transmission de données selon l'une quelconque des revendications 1 à 9,
**caractérisé en ce qu'**
en cas de résultat négatif du contrôle, on génère un signal de défaut et/ou interrompt les fonctions des unités de commande.
